(19) Europäisches Patentamt
European Patent Office
Office européen des brevets

(11) **EP 3 399 057 A1**

(12) **EUROPEAN PATENT APPLICATION**
published in accordance with Art. 153(4) EPC

(43) Date of publication:
**07.11.2018 Bulletin 2018/45**

(51) Int Cl.:
**C21D 7/04** (2006.01)

(21) Application number: **16893326.5**

(22) Date of filing: **20.12.2016**

(86) International application number:
**PCT/CN2016/110945**

(87) International publication number:
**WO 2017/152683 (14.09.2017 Gazette 2017/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.03.2016 CN 201610128715**

(71) Applicant: **Shandong Huawin Electrical & Mechanical Technology Co., Ltd.**
**Jinan, Shandong 250101 (CN)**

(72) Inventors:
• **ZHAO, Hui**
**Jinan**
**Shandong 250101 (CN)**
• **ZHAO, Xianhua**
**Jinan**
**Shandong 250101 (CN)**
• **WANG, Aifu**
**Jinan**
**Shandong 250101 (CN)**
• **XIE, Xiangke**
**Jinan**
**Shandong 250101 (CN)**
• **ZHAO, Zhiming**
**Jinan**
**Shandong 250101 (CN)**
• **LIU, Xiujuan**
**Jinan**
**Shandong 250101 (CN)**

(74) Representative: **Proi World Intellectual Property GmbH**
**Obermattweg 12**
**6052 Hergiswil, Kanton Nidwalden (CH)**

(54) **ULTRASOUND ENHANCING METHOD FOR PROLONGING FATIGUE LIFE OF METAL WORKPIECE AND USE THEREOF**

(57) The present invention provides an ultrasonic strengthening method for improving the fatigue life of a metal work-piece and its application, by clamping the metal work-piece on the ultrasonic machining lathe, ultrasonic machining of the surface of the metal work-piece with ultrasonic machining tool. The present invention focuses on presetting the compressive stress on the surface of the metal work-piece by adjusting the pressure of the ultrasonic machining tool on the surface of the metal work-piece, to eliminate the residual stress and to improve the fatigue life of the work-piece eventually. Meanwhile, the present ultrasonic strengthening method can refine the surface grain of the metal work-piece, improve the surface microhardness, wear resistance, and corrosion resistance of the surface of the metal work-piece, eventually to improve the fatigue life of the metal work-piece. The prior ultrasonic machining method is mainly used to reduce the roughness of the surface of metal work-pieces, to make the surface of the metal work-piece mirror-like. The present ultrasonic strengthening method effectively improves the surface properties of metal work-pieces, is significantly better than the prior ultrasonic machining methods.

FIG. 7

**Description**

**FIELD OF THE INVENTION**

The present invention relates to ultrasonic strengthening method for improving fatigue life of metal work-piece, which pertains to the field of ultrasonic machining technology.

**BACKGROUND OF THE INVENTION**

Fatigue life is the total times of stress cycles that will cause a fatigue failure. Fatigue damage of metal work-piece happens when the alternating stress (or strain) acts on its parts or components. Alternating stress (or strain) which is less than the material yield limit acts on parts or components repeatedly, with a certain number of cycles, crack appears in stress concentration. Crack grows under certain conditions, leads to sudden break of parts or components. This failure process is called fatigue damage. In machining process, the fatigue life of metal work-piece can be improved by different processing methods. Main methods for improving the fatigue life of metal work-pieces are as follows so far: 1. Use anti-fatigue materials, such as alloy steel; 2. Adopt forging process; 3. Adopt heat treatment process; 4. Avoid and slow down stress concentrations on parts. Deburring, edge chamfering, and rounded corners are an effective way to reduce stress concentration; 5. Preset compression stress; 6.Make sure that the fiber direction and main force direction of the rolled material, the forged material, etc. are consistent, because in the direction perpendicular to the fiber, the bearing strength will decrease by about 20%; 7. Load reduction, cooling, lubrication design; 8. Use symmetrical structure instead of a structure with eccentricity, and pay attention to the stress caused by local bending in the asymmetry; 9. Use corrosion resistance of materials; 10. Reduce openings on structural parts, and no openings on the tension surface; 11. Minimize or eliminate possible initial cracks on the surface of the parts.

Ultrasonic strengthening technology is a new machining technology, which employs the combination of activation energy and impact energy on the surface of the work-piece to obtain mirror surface and surface modification. The essence of ultrasonic strengthening technology is to convert ultrasonic energy into mechanical energy, which uses the characteristics of metal cold plasticity at room temperature, impacts the surface of metal parts in high frequency, to satisfy the requirement of surface roughness, improve the microhardness, wear resistance, and corrosion resistance of the surface of the metal parts.

Chinese Patent CN102002581A discloses an ultrasonic impact method for eliminating residual stress in welded structure, which mainly uses a device for ultrasonic impact. The device The device comprises an ultrasonic generator, an acoustic system and a frame structure. The ultrasonic generator and the acoustic system are set up on the frame structure. There is a transducer in the acoustic system. The ultrasonic generator converts 50Hz power frequency alternating current (AC) of the electric network into 20kHz ultrasonic frequency AC, to stimulate the transducer of the acoustic system. The transducer in the acoustic system converts electrical energy to mechanical vibration at the same frequency, and transfers the mechanical vibration above to the weld seam on the work-piece at a temperature of 400~800°C, to help produce a sufficient depth of plastic deformation layer on the surface of the weld seam, which improves the fatigue life of the welded work-piece.

Chinese Patent CN102560078A provides a method for surface nanocrystallization of iron and steel material, which roughens the surface of the work-piece by removing the material, to obtain a surface roughness (Ra) of 6.0~ 7.0 μm. Install the surface-roughened work-piece to be treated on the spindle of a lathe, treat the surface of the work-piece at the same speed around its axis with an ultrasonic surface strengthening treatment device. The effects of surface nanocrystallization on locomotive wheel rim include: increase the surface hardness of the locomotive wheel rim; reduce the roughness of the locomotive wheel rim; increase the wear resistance of the locomotive wheel rim; the grain becomes smaller and smaller from the surface to its sub-layer, forms a gradient structure from the substrate to the surface; forms the uniform residual compressive stress layer, and improves the fatigue life of the work-piece.

The object of the present invention is to seek an ultrasonic strengthening method, with which to produce ideal compressive stress on the surface of the metal work-piece, to control the compressive stress on the surface of the metal work-piece, and to improve the fatigue life of the work-piece eventually.

**SUMMARY OF THE INVENTION**

In view of the deficiencies of the prior art, the present invention provides an ultrasonic strengthening method for improving the fatigue life of a metal work-piece.

The present invention also provides an application of an ultrasonic strengthening method for improving the fatigue life of a metal work-piece.

The technical scheme of the invention is as follows:

Ultrasonic strengthening method for improving fatigue life of a metal work-piece, clamping the metal work-piece on the ultrasonic machining lathe, ultrasonic machining of the surface of the metal work-piece with ultrasonic machining tool, the parameters of ultrasonic machining are: linear velocity is 2-120m/min, feed rate is 0.08-1.7mm/r, the pressure imposed on the surface of the treated work-piece by ultrasonic machining tool is 50-3000N.

Preferably, the parameters of ultrasonic machining are: linear velocity is 20-60m/min, feed rate is 0.2-0.5mm/r, the pressure imposed on the surface of the treated work-piece is 600-1800N.

Preferably, the times of ultrasonic machining is 1~3.

Preferably, the amplitude of ultrasonic machining is 5-25$\mu$m.

Further preferably, the amplitude of ultrasonic machining is 6-8$\mu$m.

Preferably, the said metal work-piece comprises bearing, aero-engine blade, locomotive wheel, axle or sucker rod.

Preferably, ultrasonic machining of a bearing with ultrasonic machining tool, that is, ultrasonic machining of outer ring raceway, inner ring raceway and rolling element of the bearing with ultrasonic machining tool, the parameters of ultrasonic machining are: linear velocity is 2-100m/min, feed rate is 0.08-0.8mm/r, the pressure imposed on the surface of the treated work-piece by ultrasonic machining tool is 300-2400N.

Further preferably, ultrasonic machining of outer ring raceway, inner ring raceway and rolling element of the bearing with ultrasonic machining tool, the parameters of ultrasonic machining are: linear velocity is 3.08m/min, feed rate is 0.08mm/r, the pressure imposed on the surface of the treated work-piece by ultrasonic machining tool is 1500N.

Preferably, ultrasonic machining of a aero-engine blade with ultrasonic machining tool, that is, ultrasonic machining of the surface of aero-engine blade which is rotating around the main spindle with ultrasonic machining tool, the parameters of ultrasonic machining are: linear velocity is 2-10m/min, feed rate of ultrasonic tool is 0.08-0.8mm/r, the pressure imposed on the surface of the treated work-piece by ultrasonic machining tool is 300-2500N.

Further preferably, ultrasonic machining of the surface of aero-engine blade which is rotating around the main spindle with ultrasonic machining tool, the parameters of ultrasonic machining are: linear velocity is 3m/min, feed rate of ultrasonic tool is 0.15-0.25mm/r, the pressure imposed on the surface of the treated work-piece by ultrasonic machining tool is 800-1000N.

Preferably, ultrasonic machining of a locomotive wheel with ultrasonic machining tool, that is, ultrasonic machining of the surface of locomotive wheel which is rotating around the main spindle with ultrasonic machining tool, the parameters of ultrasonic machining are: linear velocity is 15-120m/min, feed rate is 0.08-0.2mm/r, the pressure imposed on the surface of the treated work-piece by ultrasonic machining tool is 300-3000N.

Further preferably, ultrasonic machining of the surface of locomotive wheel which is rotating around the main spindle with ultrasonic machining tool, the parameters of ultrasonic machining are: linear velocity of locomotive wheel is 57m/min, feed rate is 0.1mm/r, the pressure imposed on the surface of the treated work-piece by ultrasonic machining tool is 1200N.

Preferably, ultrasonic machining of an axle with ultrasonic machining tool, that is, ultrasonic machining of the surface of the axle which is rotating around the main spindle with ultrasonic machining tool, the parameters of ultrasonic machining are: linear velocity of the axle is 10-120m/min, feed rate is 0.1-0.6mm/r, the pressure imposed on the surface of the treated work-piece by ultrasonic machining tool is 300-3000N.

Further preferably, ultrasonic machining of the surface of axle which is rotating around the main spindle with ultrasonic machining tool, the parameters of ultrasonic machining are: linear velocity of locomotive wheel is 50-60m/min, feed rate is 0.35-0.45mm/r, the pressure imposed on the surface of the treated work-piece by ultrasonic machining tool is 1700-1800N.

Preferably, ultrasonic machining of a sucker rod with ultrasonic machining tool, that is, ultrasonic machining of the surface of the rod or/and screw thread of the sucker rod which is rotating around the main spindle with ultrasonic machining tool, the parameters of ultrasonic machining are: linear velocity of the sucker rod is 2-120m/min, feed rate is 0.08-0.8mm/r, the pressure imposed on the surface of the treated work-piece by ultrasonic machining tool is 300-3000N.

Preferably, ultrasonic machining of the surface of the rod or/and screw thread of the sucker rod which is rotating around the main spindle with ultrasonic machining tool, the parameters of ultrasonic machining are: linear velocity of the sucker rod is 38m/min, feed rate is 0.3mm/r, the pressure imposed on the surface of the treated work-piece by ultrasonic machining tool is 1500-1600N.

Preferably, the said sucker rod is a semi-finished sucker rod.

Further preferably, the surface roughness of the said semi-finished sucker rod is 3.2-10$\mu$m.

The advantages of the invention are:

The present invention

The ultrasonic strengthening method of the present invention focuses on presetting the compressive stress on the surface of the metal work-piece by adjusting the pressure of the ultrasonic machining tool on the surface of the metal work-piece, to eliminate the residual stress, to refine the surface grain of the metal work-piece, to improve the surface microhardness, wear resistance, and corrosion resistance of the surface of the metal parts, eventually to improve the fatigue life of the work-piece. The prior ultrasonic machining method is mainly used to reduce the roughness of the surface of metal work-pieces, to make the surface of the metal work-piece mirror-like. The present ultrasonic strengthening method effectively improves the surface properties of metal work-pieces, is significantly better than the prior ultrasonic machining methods.

**BRIEF DESCRIPTION OF THE DRAWINGS**

FIG.1 is the curve graph of pressure - surface compressive stress in embodiment 1;
FIG.2 is the curve graph of pressure - surface compressive stress in embodiment 3;
FIG.3 is the curve graph of cycle times - fatigue limit before and after the ultrasonic strengthening of metal work-piece in embodiment 3;
FIG.4 is the curve graph of pressure - surface compressive stress of locomotive wheel in embodiment 5;
FIG.5 is the curve graph of pressure - surface compressive stress of axle in embodiment 7;
FIG.6 is the curve graph of pressure - surface compressive stress of sucker rod in embodiment 9;
FIG.7 is the metallographic graph of the surface of sucker rod after the ultrasonic strengthening treatment in embodiment 9.

**DETAILED DESCRIPTION OF THE PERFERRED EMBODIMENTS**

This invention will be further illustrated by the following embodiments and the accompanying drawings, but not limited thereto.

Embodiment 1:

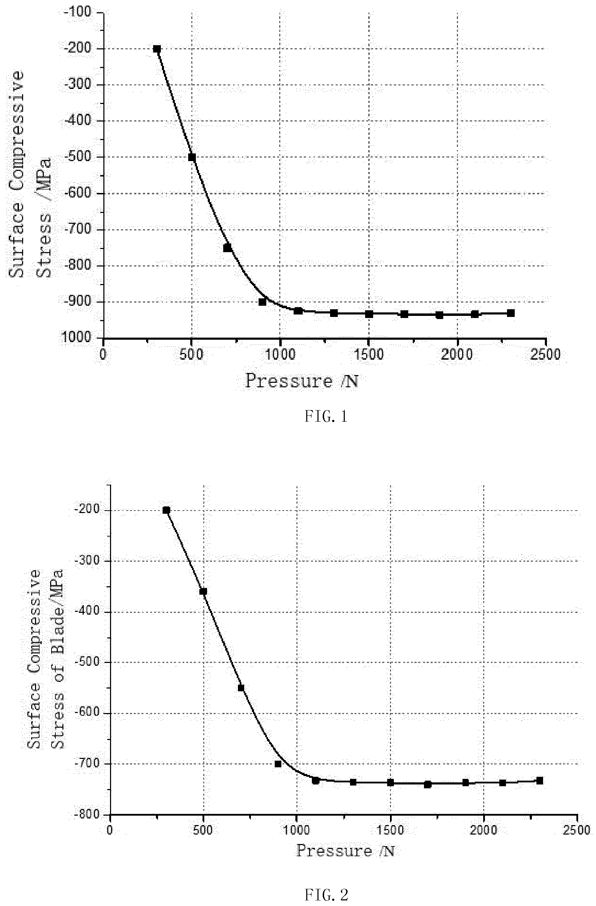

This embodiment provides an ultrasonic strengthening method for improving the fatigue life of a metal work-piece, ultrasonic machining of a bearing with ultrasonic machining tool, that is, ultrasonic machining of outer ring raceway, inner ring raceway and rolling element of the bearing with ultrasonic machining tool, the parameters of ultrasonic machining of outer ring raceway, inner ring raceway and rolling element of the bearing are the same: linear velocity is 2m/min, feed rate is 0.08mm/r, the pressure imposed on the surface of the treated work-piece by ultrasonic machining tool is 300-2400N.The said pressure imposed on the surface of the work-piece by ultrasonic machining tool is normal force, with ultrasonic machining 3 times.
The curve graph of compressive stress on the surface of bearing after ultrasonic strengthening is obtained as shown in FIG.1 with changing the pressure of the ultrasonic machining tool to the surface of the treated work-piece while other parameters remain the same. Referring to FIG.1, when the pressure of the ultrasonic machining tool imposed on the surface to be machined is aroud 1000N, the preset compressive stress on the surface of the work-piece reaches a maximum of -900MPa, as the pressure increases, the preset compressive stress on the surface of the work-piece does not change much hereafter.
After ultrasonic strengthening of the outer ring raceway, the inner ring raceway and the rolling element with the ultrasonic strengthening method of the present embodiment, the fatigue life of the bearing can be increased by more than 5 times compared with the conventionally processed bearing.
The curve graph of compressive stress on the bearing surface after ultrasonic strengthening is still the same curve graph as shown in FIG.1 with changing the pressure of the ultrasonic machining tool to the surface of the treated work-piece while other parameters remain the same, the said other parameters are: linear velocity is 100m/min, feed rate is 0.8mm/r, the pressure imposed on the surface of the treated work-piece by ultrasonic machining tool is 300-2400N.The said pressure imposed on the surface of the work-piece by ultrasonic machining tool is normal force, with ultrasonic machining 3 times. The fatigue life of the bearing can be increased by more than 5 times compared with the conventionally processed bearing. Thus, the preset compressive stress on the surface of the metal is generally only related to the pressure imposed on the surface of the treated work-piece by ultrasonic machining tool.

Embodiment 2:

This embodiment provides an ultrasonic strengthening method for improving the fatigue life of a metal work-piece, specifically ultrasonic machining of a bearing with ultrasonic machining tool, that is, ultrasonic machining of outer ring raceway, inner ring raceway and rolling element of the bearing with ultrasonic machining tool, the parameters of ultrasonic machining of outer ring raceway, inner ring raceway and rolling element of the bearing are the same: linear velocity is 3.08m/min, feed rate is 0.08mm/r, the pressure imposed on the surface of the treated work-piece by ultrasonic machining tool is 1500N.The said pressure imposed on the surface of the work-piece by ultrasonic machining tool is normal force, with ultrasonic machining 3 times.

Embodiment 3:

This embodiment provides an ultrasonic strengthening method for improving the fatigue life of a metal work-piece, ultrasonic machining of a aero-engine blade with ultrasonic machining tool, the parameters of ultrasonic machining are: linear velocity of ultrasonic tool is 2m/min, feed rate is 0.08mm/r, the pressure imposed on the surface of the treated work-piece by ultrasonic machining tool is 300-2500N. The times of ultrasonic machining is 3.

The curve graph of compressive stress on the surface of aero-engine blade after ultrasonic strengthening is obtained as shown in FIG.2 with changing the pressure of the ultrasonic machining tool to the surface of the treated work-piece while other parameters remain the same. Referring to FIG.2, when the pressure of the ultrasonic machining tool imposed on the surface to be machined is aroud 1000N, the preset compressive stress on the surface of the work-piece reaches a maximum of -720MPa, as the pressure increases, the preset compressive stress on the surface of the work-piece does not change much hereafter.

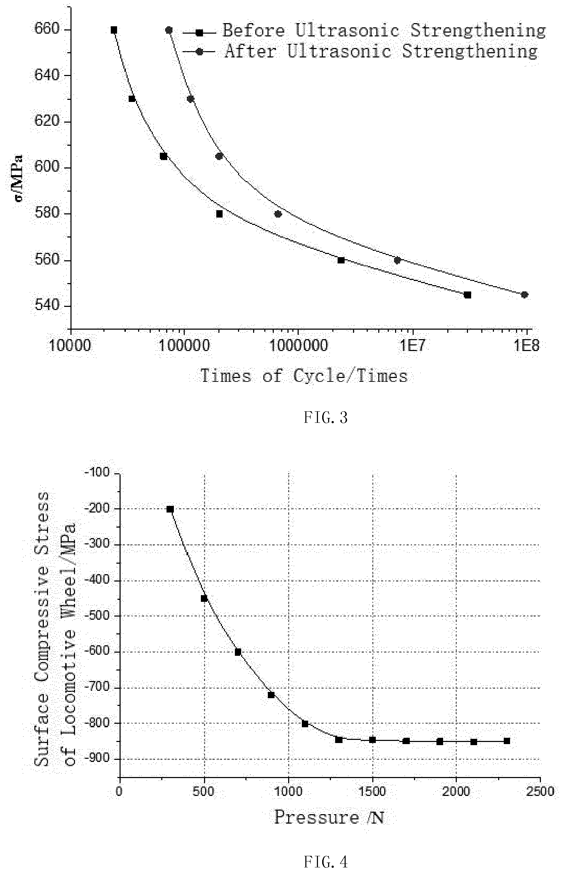

The curve graph of cycle times and fatigue limit after the ultrasonic strengthening of aero-engine blade in this embodiment is FIG 3, the fatigue life of the blade can be increased by more than 6 times.

Embodiment 4:

An ultrasonic strengthening method for improving the fatigue life of a metal work-piece, ultrasonic machining of a aero-engine blade with ultrasonic machining tool, the parameters of ultrasonic machining are: linear velocity of ultrasonic tool is 10m/min, feed rate of ultrasonic tool is 0.8mm/r, the pressure imposed on the surface of the treated work-piece by ultrasonic machining tool is 800-1000N. The times of ultrasonic machining is 3.

Embodiment 5:

An ultrasonic strengthening method of metal work-piece, ultrasonic machining of a locomotive wheel with ultrasonic machining tool, that is, ultrasonic machining of the surface of locomotive wheel which is rotating around the main spindle with ultrasonic machining tool, the parameters of ultrasonic machining are: linear velocity of locomotive wheel is 15m/min, feed rate is 0.08mm/r, the pressure imposed on the surface of the treated work-piece by ultrasonic machining tool is 300-3000N.

The curve graph of compressive stress on the surface of locomotive wheel after ultrasonic strengthening is obtained as shown in FIG.4 with changing the pressure of the ultrasonic machining tool to the surface of the treated work-piece while other parameters remain the same. Referring to FIG.4, when the pressure of the ultrasonic machining tool imposed on the surface to be machined is aroud 1250N, the preset compressive stress on the surface of the work-piece reaches a maximum of -850MPa, as the pressure increases, the preset compressive stress on the surface of the work-piece does not change much hereafter.

The locomotive wheel is machined with the ultrasonic strengthening method in this embodiment, fatigue life before and after the ultrasonic strengthening of the locomotive wheel is shown in Table 1.

Table 1: Fatigue Life of Locomotive Wheels Before and After Ultrasonic Strengthening

| No. | Stress range/MPa | Fatigue life before ultrasonic strengthening/ ($\times 10^6$) | Fatigue life after ultrasonic strengthening/ ($\times 10^6$) |
|---|---|---|---|
| 1 | 225 | 15.2 | 33.1 |
| 2 | 247 | 6.3 | 14.2 |
| 3 | 264 | 3.25 | 6.81 |
| 4 | 282 | 1.6 | 3.52 |
| 5 | 3.4 | 0.68 | 1.45 |
| 6 | 322 | 0.335 | 0.84 |
| 7 | 345 | 0.14 | 0.30 |

It reads from Table 1, when different pressures are given to the same 7 locomotive wheels, the fatigue life of each locomotive wheel can be increased by 2 times compared with the locomotive wheels without ultrasonic strengthening.

Embodiment 6:

An ultrasonic strengthening method of metal work-piece, ultrasonic machining of a locomotive wheel with ultrasonic machining tool, that is, ultrasonic machining of the surface of locomotive wheel which is rotating around the main spindle with ultrasonic machining tool, the parameters of ultrasonic machining are: linear velocity of locomotive wheel is 57m/min, feed rate is 0.1mm/r, the pressure imposed on the surface of the treated work-piece by ultrasonic machining tool is 1200N.

Embodiment 7:

An ultrasonic strengthening method of metal work-piece, ultrasonic machining of an axle with ultrasonic machining tool, that is, ultrasonic machining of the surface of the axle which is rotating around the main spindle with ultrasonic machining tool, the parameters of ultrasonic machining are: linear velocity of the axle is 120m/min, feed rate is 0.6mm/r, the pressure imposed on the surface of the treated work-piece by ultrasonic machining tool is 300-3000N. The times of ultrasonic machining is 3.

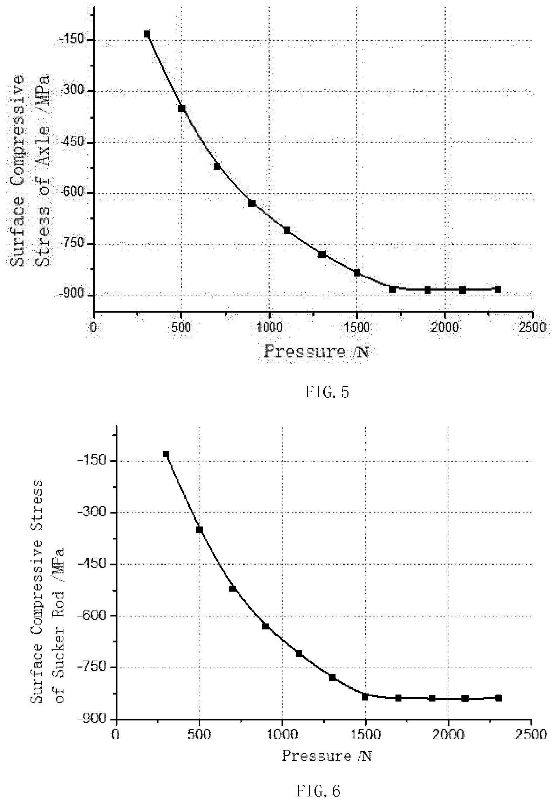

The curve graph of surface compressive stress of axle after ultrasonic strengthening is obtained as shown in FIG.5 with changing the pressure of the ultrasonic machining tool to the surface of the treated work-piece while other parameters remain the same. Referring to FIG.5, when the pressure of the ultrasonic machining tool imposed on the surface to be machined is around 1750N, the preset compressive stress on the surface of the work-piece reaches a maximum surface of the work-piece does not change much hereafter.

Traditional turning + grinding machining and ultrasonic strengthening separately employed for the axle samples of the same material, the results are as follows:

Table 2: Traditional Turning + Grinding Machining of the Axle Samples

| No. | Weight (N) | Total Weight (N) | Total Load (MPa) | Cycles., |
|---|---|---|---|---|
| 1 | 335 | 433 | 310.6 | 156, 4800 |
| 2 | 325 | 423 | 303.4 | 429, 1300 |
| 3 | 315 | 413 | 296.2 | 376, 7900 |
| 4 | 305 | 403 | 289.1 | 1070, 9000 |
| 5 | 315 | 413 | 296.2 | 1148, 0600 |
| 6 | 325 | 423 | 303.4 | 147, 8600 |
| 7 | 315 | 413 | 296.2 | 1021, 6600 |
| 8 | 325 | 423 | 303.4 | 52, 4500 |
| 9 | 315 | 413 | 296.2 | 244, 6300 |
| 10 | 305 | 403 | 289.1 | 1113, 7900 |
| 11 | 315 | 413 | 296.2 | 410, 3900 |
| 12 | 305 | 403 | 289.1 | 1005, 1300 |

Table 3: Ultrasonic Strengthening of the Axle Samples

| No. | Weight (N) | Total Weight (N) | Load (MPa) | Cycles |
|---|---|---|---|---|
| 1 | 475 | 573 | 411.0 | × |
| 2 | 465 | 563 | 403.9 | × |
| 3 | 455 | 553 | 396.7 | ○ |
| 4 | 465 | 563 | 403.9 | ○ |
| 5 | 475 | 573 | 411.0 | × |
| 6 | 465 | 563 | 403.9 | ○ |
| 7 | 475 | 573 | 411.0 | × |
| 8 | 465 | 563 | 403.9 | × |
| 9 | 455 | 553 | 396.7 | × |
| 10 | 445 | 543 | 389.5 | ○ |
| 11 | 455 | 553 | 396.7 | ○ |

(continued)

| No. | Weight (N) | Total Weight (N) | Load (MPa) | Cycles |
|---|---|---|---|---|
| 12 | 465 | 563 | 403.9 | × |
| 13 | 455 | 553 | 396.7 | ○ |

Note: "×"means more than $10^7$ times,"o"means less than $10^7$ times.

Fatigue limit is:

$$\sigma_{-1} = \frac{1}{10}\left[(403.9+396.7)+(403.9+411)+(403.9+411)+(396.7+389.5)+(396.7+403.9)\right]$$
$$=401.72\text{MPa}$$

Standard deviation is:

$$S_{\sigma_{-1}} = \sqrt{\frac{\sum_i^k (\sigma_i)^2 - \frac{1}{k}(\sum_i^k \sigma_{-1})^2}{k-1}}$$
$$= \sqrt{\frac{2\times(400.3)^2 + 2\times(407.45)^2 + (393.15)^2 - 5\times(401.72)^2}{5-1}}$$
$$=12$$

Comparing Table 2 to Table 3, it is seen that the fatigue strength of the axle increases from about 300MPa to about 401MPa with ultrasonic strengthening process, the fatigue life of axle is greatly improved after ultrasonic strengthening comparing to the results of the traditional turning + grinding machining.

Embodiment 8:

An ultrasonic strengthening method of metal work-piece, ultrasonic machining of an axle with ultrasonic machining tool, that is, ultrasonic machining of the surface of the axle which is rotating around the main spindle with ultrasonic machining tool, the parameters of ultrasonic machining are: linear velocity of the axle is 10m/min, feed rate is 0.1mm/r, the pressure imposed on the surface of the treated work-piece by ultrasonic machining tool is 300-3000N. The times of ultrasonic machining is 3.

Embodiment 9:

An ultrasonic strengthening method of metal work-piece, ultrasonic machining of the surface of the rod or/and screw thread of the sucker rod which is rotating around the main spindle with ultrasonic machining tool, the said sucker rod is a semi-finished sucker rod, and the said surface roughness of the said semi-finished sucker rod is 3.2μm. The parameters of ultrasonic machining are: linear velocity of the sucker rod is 2m/min, feed rate is 0.08mm/r, the pressure imposed on the surface of the treated work-piece by ultrasonic machining tool is 300-3000N.

The curve graph of compressive stress on the surface of sucker rod after ultrasonic strengthening is obtained as shown in FIG.6 with changing the pressure of the ultrasonic machining tool to the surface of the treated work-piece while other parameters remain the same. Referring to FIG.6, when the pressure of the ultrasonic machining tool imposed on the surface to be machined is around 1500N, the preset compressive stress on the surface of the work-piece reaches a maximum of -830MPa, as the pressure increases, the preset compressive stress on the surface of the work-piece does not change much hereafter.

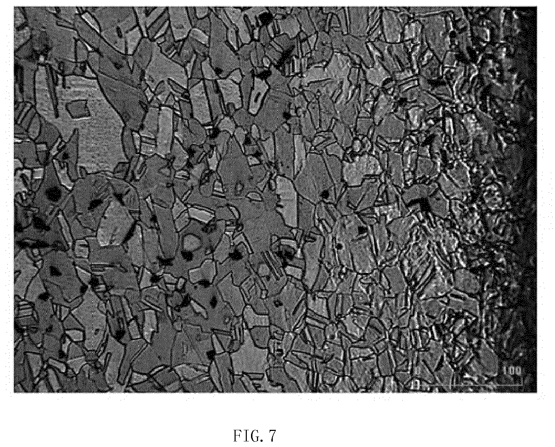

The metallographic graph of the surface of sucker rod after the ultrasonic strengthening treatment is shown in FIG.7.

The results of comparative test for the fatigue life of the sucker rod before and after the ultrasonic strengthening are shown in Table 4.

Table 4: Report of the Comparative Test for the Fatigue Life

| Samples Without Ultrasonic Strengthening | | | Samples With Ultrasonic Strengthening | | |
|---|---|---|---|---|---|
| No. | Diameter (mm) | Cycles | No. | Diameter (mm) | Cycles |
| 1 | 7.02 | $1.193\times10^6$ | 9 | 7.01 | $>1.0\times10^7$(Passed) |
| 2 | 7.02 | $5.82\times10^5$ | 10 | 7.02 | $>1.0\times10^7$(Passed) |
| 3 | 7.01 | $6.51\times10^5$ | 11 | 6.99 | $>1.0\times10^7$(Passed) |
| 4 | 7.00 | $1.594\times10^6$ | 12 | 7.02 | $>1.0\times10^7$(Passed) |
| 5 | 7.02 | $1.339\times10^6$ | 13 | 7.01 | $>1.0\times10^7$(Passed) |
| 6 | 6.98 | $4.56\times10^5$ | 14 | 7.01 | $>1.0\times10^7$(Passed) |
| 7 | 6.98 | $3.28\times10^5$ | 15 | 7.02 | $>1.0\times10^7$(Passed) |

It can be seen from Table 4 that the times of cycle use of sucker rod after ultrasonic strengthening is significantly more than that of the sucker rod without ultrasonic strengthening. Sucker rod with ultrasonic strengthening has obvious advantages.

Embodiment 10:

An ultrasonic strengthening method of metal work-piece, ultrasonic machining of the surface of the rod or/and screw thread of the sucker rod which is rotating around the main spindle with ultrasonic machining tool. The parameters of ultrasonic machining are: linear velocity of the sucker rod is 120m/min, feed rate is 0.8mm/r, the pressure imposed on the surface of the treated work-piece by ultrasonic machining tool is 300-3000N. The said sucker rod is a semi-finished sucker rod. The surface roughness of the said semi-finished sucker rod is 10$\mu$m.

## Claims

1.  An ultrasonic strengthening method for improving the fatigue life of a metal work-piece, **characterized in that**, comprising the following steps: clamping the metal work-piece on the ultrasonic machining lathe, ultrasonic machining of the surface of the metal work-piece with ultrasonic machining tool, the parameters of ultrasonic machining are: linear velocity is 2-120m/min, feed rate is 0.08-1.7mm/r, the pressure imposed on the surface of the treated work-piece by ultrasonic machining tool is 50-3000N.

2.  An ultrasonic strengthening method for improving the fatigue life of a metal work-piece as claimed in claim 1, **characterized in that**, the parameters of ultrasonic machining are: linear velocity is 20-60m/min, feed rate is 0.2-0.5mm/r, the pressure imposed on the surface of the treated work-piece is 600-1800N.

3.  An ultrasonic strengthening method for improving the fatigue life of a metal work-piece as claimed in claim 1, **characterized in that**, the times of ultrasonic machining is 1~3.

4.  An ultrasonic strengthening method for improving the fatigue life of a metal work-piece as claimed in claim 1, **characterized in that**, the amplitude of ultrasonic machining is 5-25$\mu$m.

5.  An ultrasonic strengthening method for improving the fatigue life of a metal work-piece as claimed in claim 1 or claim 2, **characterized in that**, the said metal work-piece comprises bearing, aero-engine blade, locomotive wheel, axle or sucker rod.

6.  An ultrasonic strengthening method for improving the fatigue life of a metal work-piece as claimed in claim 5, **characterized in that**, ultrasonic machining of a bearing with ultrasonic machining tool, that is, ultrasonic machining of outer ring raceway, inner ring raceway and rolling element of the bearing with ultrasonic machining tool, the parameters of ultrasonic machining are: linear velocity is 2-100m/min, feed rate is 0.08-0.8mm/r, the pressure imposed on the surface of the treated work-piece by ultrasonic machining tool is 300-2400N;
Preferably, the said linear velocity is 3.08m/min, the said feed rate is 0.08mm/r, the said pressure imposed on the surface of the treated work-piece by ultrasonic machining tool is 1500N.

7. An ultrasonic strengthening method for improving the fatigue life of a metal work-piece as claimed in claim 5, **characterized in that**, ultrasonic machining of a aero-engine blade with ultrasonic machining tool, that is, ultrasonic machining of the surface of aero-engine blade which is rotating around the main spindle with ultrasonic machining tool, the parameters of ultrasonic machining are: linear velocity is 2-10m/min, feed rate of ultrasonic tool is 0.08-0.8mm/r, the pressure imposed on the surface of the treated work-piece by ultrasonic machining tool is 300-2500N; Preferably, the said linear velocity is 3m/min, the said feed rate of ultrasonic tool is 0.15-0.25mm/r, the said pressure imposed on the surface of the treated work-piece by ultrasonic machining tool is 800-1000N.

8. An ultrasonic strengthening method for improving the fatigue life of a metal work-piece as claimed in claim 5, **characterized in that**, ultrasonic machining of a locomotive wheel with ultrasonic machining tool, that is, ultrasonic machining of the surface of locomotive wheel which is rotating around the main spindle with ultrasonic machining tool, the parameters of ultrasonic machining are: linear velocity is 15-120m/min, feed rate is 0.08-0.2mm/r, the pressure imposed on the surface of the treated work-piece by ultrasonic machining tool is 300-3000N;
Preferably, the said linear velocity of locomotive wheel is 57m/min, the said feed rate is 0.1mm/r, the said pressure imposed on the surface of the treated work-piece by ultrasonic machining tool is 1200N.

9. An ultrasonic strengthening method for improving the fatigue life of a metal work-piece as claimed in claim 5, **characterized in that**, ultrasonic machining of an axle with ultrasonic machining tool, that is, ultrasonic machining of the surface of the axle which is rotating around the main spindle with ultrasonic machining tool, the parameters of ultrasonic machining are: linear velocity of the axle is 10-120m/min, feed rate is 0.1-0.6mm/r, the pressure imposed on the surface of the treated work-piece by ultrasonic machining tool is 300-3000N;
Preferably, the said linear velocity of locomotive wheel is 50-60m/min, the said feed rate is 0.35-0.45mm/r, the said pressure imposed on the surface of the treated work-piece by ultrasonic machining tool is 1700-1800N.

10. An ultrasonic strengthening method for improving the fatigue life of a metal work-piece as claimed in claim 5, **characterized in that**, ultrasonic machining of a sucker rod with ultrasonic machining tool, that is, ultrasonic machining of the surface of the rod or/and screw thread of the sucker rod which is rotating around the main spindle with ultrasonic machining tool, the parameters of ultrasonic machining are:

linear velocity of the sucker rod is 2-120m/min, feed rate is 0.08-0.8mm/r, the pressure imposed on the surface of the treated work-piece by ultrasonic machining tool is 300-3000N;
Preferably, the said linear velocity of the sucker rod is 38m/min, the said feed rate is 0.3mm/r, the said pressure imposed on the surface of the treated work-piece by ultrasonic machining tool is 1500-1600N.

FIG. 1

FIG. 2

FIG. 3

FIG. 4

FIG. 5

FIG. 6

FIG. 7

# INTERNATIONAL SEARCH REPORT

| International application No. |
|---|
| **PCT/CN2016/110945** |

## A.  CLASSIFICATION OF SUBJECT MATTER

C21D 7/04 (2006.01) i

According to International Patent Classification (IPC) or to both national classification and IPC

## B.  FIELDS SEARCHED

Minimum documentation searched (classification system followed by classification symbols)

C21D

Documentation searched other than minimum documentation to the extent that such documents are included in the fields searched

Electronic data base consulted during the international search (name of data base and, where practicable, search terms used)

CNKI, CNABS, CNTXT, SIPOABS, DWPI: ultrasonic, linear velocity, line speed, feed quantity, cutting speed, pressure

## C.  DOCUMENTS CONSIDERED TO BE RELEVANT

| Category* | Citation of document, with indication, where appropriate, of the relevant passages | Relevant to claim No. |
|---|---|---|
| X | CN 103072049 A (ZHAO, Xianhua), 01 May 2013 (01.05.2013), description, paragraphs 0008-0009 | 1-10 |
| X | CN 103084634 A (ZHAO, Xianhua), 08 May 2013 (08.05.2013), description, paragraph 0008 | 1-10 |
| X | CN 102560078 A (GENERAL RESEARCH INSTITUTE FOR NONFERROUS METALS), 11 July 2012 (11.07.2012), description, paragraphs 0005-0013 | 1-10 |
| X | CN 101941082 A (CHINA COAL HANDAN COAL MINING MACHINERY CORP., LTD.), 12 January 2011 (12.01.2011), particular embodiments | 1-10 |
| X | CN 101220405 A (TIANJIN UNIVERSITY), 16 July 2008 (16.07.2008), particular embodiments | 1-10 |
| PX | CN 105734233 A (SHANDONG HUAWIN ELECTRICAL & MECHANICAL TECHNOLOGY CO., LTD.), 06 July 2016 (06.07.2016), claims 1-10 | 1-10 |
| PX | CN 105666035 A (SHANDONG CHAOWEN ENERGY EQUIPMENT CO., LTD.), 15 June 2016 (15.06.2016), particular embodiments | 1-10 |

☒ Further documents are listed in the continuation of Box C.       ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 February 2017 (08.02.2017) | **22 February 2017 (22.02.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LU, Shiyan** Telephone No.: (86-10) **010-61648518** |
|---|---|

Form PCT/ISA/210 (second sheet) (July 2009)

## INTERNATIONAL SEARCH REPORT

| International application No. |
|---|
| **PCT/CN2016/110945** |

**C (Continuation).     DOCUMENTS CONSIDERED TO BE RELEVANT**

| Category* | Citation of document, with indication, where appropriate, of the relevant passages | Relevant to claim No. |
|---|---|---|
| PX | CN 105834671 A (SHANDONG HUAWIN ELECTRICAL & MECHANICAL TECHNOLOGY CO., LTD.), 10 August 2016 (10.08.2016), particular embodiments | 1-10 |
| PX | CN 105945511 A (SHANDONG HUAWIN ELECTRICAL & MECHANICAL TECHNOLOGY CO., LTD.), 21 September 2016 (21.09.2016), particular embodiments | 1-10 |

Form PCT/ISA/210 (continuation of second sheet) (July 2009)

## INTERNATIONAL SEARCH REPORT
### Information on patent family members

| International application No. |
| --- |
| **PCT/CN2016/110945** |

| Patent Documents referred in the Report | Publication Date | Patent Family | Publication Date |
| --- | --- | --- | --- |
| CN 103072049 A | 01 May 2013 | None | |
| CN 103084634 A | 08 May 2013 | None | |
| CN 102560078 A | 11 July 2012 | None | |
| CN 101941082 A | 12 January 2011 | CN 101941082 B | 22 February 2012 |
| CN 101220405 A | 16 July 2008 | None | |
| CN 105734233 A | 06 July 2016 | None | |
| CN 105666035 A | 15 June 2016 | None | |
| CN 105834671 A | 10 August 2016 | None | |
| CN 105945511 A | 21 September 2016 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102002581 A

- CN 102560078 A